# FASCICULE DE BREVET EUROPEEN

(11) **EP 3 322 776 B1**
(45) Date de publication et mention de la délivrance du brevet: **29.04.2020**
(21) Numéro de dépôt: 16757276.7
(22) Date de dépôt: 12.07.2016
(51) Int. Cl.: C10L 3/08, C10L 3/10, C25B 1/00

(54) **DISPOSITIF ET PROCÉDÉ DE PRODUCTION DE GAZ DE SYNTHÈSE**
VORRICHTUNG UND VERFAHREN ZUR HERSTELLUNG VON SYNTHESEGAS
DEVICE AND METHOD FOR PRODUCING SYNTHETIC GAS

(30) Priorité: 16.07.2015 FR 1556743; 21.01.2016 FR 1650498
(43) Date de publication de la demande: 23.05.2018
(73) Titulaire: ENGIE, 92400 Courbevoie (FR)
(72) Inventeur: FORTIN, Stéphane, 59850 Nieppe (FR); KARA, Yilmaz, 95600 Eaubonne (FR); RICARD, Julia, 94230 Cachan (FR)
(74) Mandataire: Cornuejols, Georges
(86) Numéro de dépôt international: PCT/FR2016/051790
(87) Numéro de publication internationale: WO 2017/009575

(56) Documents cités:
- EP-A1- 2 110 425
- WO-A1-2014/154250
- WO-A1-2014/207703
- WO-A1-2015/011503
- WO-A1-2016/193751
- FR-A1- 2 467 834
- US-A- 3 967 936
- US-A1- 2009 247 653
- US-A1- 2013 317 126

## Description

### DOMAINE TECHNIQUE DE L'INVENTION

La présente invention vise un dispositif et un procédé de production de gaz de synthèse. Elle s'applique, notamment, à la filière de production de gaz naturel de synthèse ou « SNG » (de l'anglais Synthesis Natural Gas, traduit par gaz naturel de synthèse)

### ÉTAT DE LA TECHNIQUE

La production de biométhane, un « SNG » (de Synthesis Natural Gas, traduit par Gaz Naturel de Synthèse) peut être réalisée par la mise en oeuvre de procédés Power-to-SNG (traduit par « Energie-vers-SNG »), abréviés « P2G », qui visent à convertir de l'eau, du CO₂ et de l'énergie électrique en un gaz combustible de qualité semblable à celle du biométhane et du gaz naturel.

Pour dégager une rentabilité économique satisfaisante, le P2G est basé sur une utilisation de l'énergie électrique d'origine renouvelable durant les périodes de surproduction de cette énergie. Ainsi, la technologie de méthanation requiert une grande souplesse opérationnelle en termes de puissance, ou débit et de traitement.

Au sein de cette filière, plusieurs options technologiques existent.

La première option consiste à directement co-électrolyser de l'eau, sous forme vapeur, et du CO₂ d'origine anthropique pour produire du CO et du H₂. Cette conversion se fait généralement à haute température et le gaz produit est un syngas dont les caractéristiques compositionnelles sont proches de celles de la gazéification de biomasse (CO, H₂, CO₂ et H₂O). La différence principale relève d'une meilleure maîtrise du ratio H₂/CO sans étape de réaction du gaz à l'eau, abréviée « WGS » (pour Water Gas Shift, traduit par Réaction du Gaz à l'Eau), dite « réaction de Dussan ». Cette réaction de WGS a pour formule :

CO + H₂O⇔ H₂ + CO₂

La seconde option consiste à convertir l'eau par électrolyse, alcaline ou à membrane à électrolyte polymère, pour produire du H₂ à la cathode et de l'O₂ à l'anode. Le H₂ ainsi produit est ensuite mélangé à du CO₂ pour former du syngas à l'origine du gaz naturel de synthèse.

La production du biométhane à partir du syngas est basée sur la réaction catalytique de méthanation (ou d'hydrogénation) du CO ou du CO₂ dite « réaction de Sabatier ». La méthanation consiste à convertir le monoxyde ou le dioxyde de carbone en présence d'hydrogène et d'un catalyseur, généralement à base de nickel ou d'un autre métal de transition plus ou moins noble, pour produire du méthane. Elle est régie par les réactions équilibrées compétitives d'hydrogénation suivantes :

*CO + 3H₂* ⇔ *CH₄* + *H₂O ΔH_{298K}* = *-206 kJ*/*mol*

*CO₂* + *4H₂* ⇔ *CH₄* + *2H₂O ΔH_{298K}* = *-27 kcal*/*mol*

La première option met en oeuvre, pour produire du SNG à partir du syngas, une réaction de méthanation du CO tandis que la deuxième option met en oeuvre une réaction de méthanation du CO₂.

La réaction de méthanation est une réaction exothermique avec diminution du nombre de moles ; conformément au principe de Le Chatelier, la réaction est favorisée par l'augmentation de la pression et défavorisée par l'augmentation de la température.

Ces réactions équilibrées fortement exothermiques requièrent une bonne maîtrise du refroidissement du réacteur dans lequel elles ont lieu.

La chaleur dégagée lors de la conversion du CO est d'environ 2,7 kWh lors de la production de 1 Nm³ de méthane. Le contrôle de la température au sein du réacteur, et donc l'élimination de la chaleur produite par la réaction, est un des points clés pour minimiser la désactivation du catalyseur, par frittage, et maximiser les taux de conversion en méthane.

La valorisation de la chaleur produite lors de la méthanation, soit au sein de l'unité proprement dite soit par vente de chaleur, constitue un des points clés de l'équilibre technico économique du procédé de production de SNG. La production de vapeur est un moyen classique pour obtenir cette valorisation.

Les réactions de méthanation dont les cinétiques sont rapides aux températures mises en oeuvre, se caractérisent par une très forte exothermicité.

Pour maximiser la production de CH₄ par hydrogénation du dioxyde de carbone, et minimiser l'excès de CO₂, il convient que H₂ et CO₂ soient dans un rapport stœchiométrique autour de 4 pour 1. Même en respectant ce ratio, la réaction reste incomplète du fait des équilibres chimiques.

Parmi les technologies de réacteur de méthanation, certaines mettent en oeuvre un réacteur en lit fluidisé dense, le lit étant formé par le catalyseur de la réaction de méthanation. L'élimination de la chaleur produite par la réaction est alors réalisée par des échangeurs immergés dans le lit fluidisé. Cependant, en raison de la très forte exothermicité de la réaction, les quantités de chaleurs à évacuer, et donc les surfaces d'échange requises, sont importantes. Ainsi, le volume occupé par cet échangeur conduit à un surdimensionnement global de la taille du réacteur et surtout à une complexification de sa conception.

La mise en oeuvre d'un réacteur fluidisé est une solution simple pour limiter la température de réaction. La fluidisation du catalyseur par le mélange réactionnel permet une homogénéisation quasi-parfaite des températures en tous points de la couche catalytique et le réacteur peut être assimilé à un réacteur isotherme. L'élimination de la chaleur produite par la réaction s'effectue par l'intermédiaire d'échangeurs immergés au sein de la couche fluidisée. Les coefficients d'échanges thermiques entre la couche fluidisée et une paroi plongée dans le lit sont très importants (de l'ordre de 400 à 600 watt par Kelvin et par mètre carré, noté W/K.m², comparables à ceux entre un liquide et une paroi) et permettent de minimiser les dimensions de l'échangeur et donc la taille globale du réacteur.

Dans la gamme de température mise en oeuvre dans les réacteurs de méthanation en lit fluidisé, la cinétique de la réaction de méthanation est très rapide, et, par conséquent, la quantité de catalyseur requise du seul fait de la réaction chimique est faible. Aussi la taille du réacteur et la quantité de catalyseur utilisée résultent de l'encombrement de l'échangeur implanté au sein du lit fluidisé et de la surface de transfert requise.

Du fait de l'échange thermique et du régime de fluidisation, un inconvénient majeur est imputable à cette technologie pour un fonctionnement à haute pression. En effet, la baisse du volume gazeux due à l'augmentation de pression conduit à une section disponible moins importante pour positionner l'échangeur (à puissance égale). Des solutions de l'homme du métier existent cependant pour pallier à l'ajustement de la surface effective ou au régime de fluidisation. Les solutions non-exhaustives sont par exemples :
- la diminution du nombre de tubes et par conséquent l'augmentation de la hauteur de couche de catalyseur avec une limite haute liée au phénomène de « slugging » (traduit par pistonnage) avec des propriétés d'échange thermique réduites, le slugging correspond au déplacement de solide par paquet avec, entre deux paquets, une poche gazeuse qui encombre toute la section d'un réacteur, ce qui a pour effet l'obtention d'une alternance entre paquets solides et gazeuse en lieu d'un mélange de gaz et de solides tels qu'attendus et
- la modification des caractéristiques physiques du catalyseur (granulométrie, densité du support) pour conserver une fluidisation équivalente pour un débit volumique plus faible.

Pour l'optimisation de la souplesse opérationnelle le lit fluidisé permet par nature une flexibilité plus large en termes de débit et donc de puissance de réacteur autour des conditions de dimensionnement.

Les solutions actuellement proposées pour cette famille technologique ne se distinguent pas entres-elles vraiment sur l'efficacité de conversion mais principalement sur la méthodologie mise en oeuvre pour refroidir le réacteur.

Les principes de refroidissement, dans le cadre de la méthanation du CO₂ sont actuellement les mêmes que pour la méthanation du CO lorsque la conversion est réalisée en réacteur « isotherme ». Par ailleurs, même lors d'un ajustement au ratio stœchiométrique quatre pour un des réactifs H₂ / CO₂, le SNG produit contient encore du H₂, du CO₂ et de l'eau qu'il est nécessaire d'éliminer pour atteindre les spécifications d'injection dans le réseau de gaz naturel. Le schéma global de principe pour les systèmes actuels de P2G comporte ainsi les étapes suivantes :
- une électrolyse de l'eau,
- une méthanation du CO₂ et de l'hydrogène produit par l'électrolyse et
- une mise aux spécifications pour séparer le H₂O et H₂/CO₂ résiduels.

L'étape de mise aux spécifications a pour fonction de séparer les constituants du gaz issu de la méthanation afin d'obtenir un biométhane répondant aux spécifications d'injection sur le réseau de gaz naturel. Ainsi, cette séparation génère des sous-produits que sont H₂O, CO₂ et H₂. Elles sont le plus souvent réalisées dans des équipements séparés avec des conditions opératoires parfois très différentes.

Avant le conditionnement et l'injection du SNG produit, il convient d'éliminer une fraction importante du H₂ résiduel de la réaction de méthanation afin de répondre aux spécifications. La technique la plus communément utilisée pour cette séparation est la perméation membranaire qui peut présenter un niveau de complexité et des coûts, en termes d'investissement et d'opération, non négligeables avec un impact significatif sur la chaîne de valeur.

La composition du SNG brut en sortie de réacteur est intimement liée aux conditions de fonctionnement du réacteur, en termes de pression, de température, du mode de fonctionnement adiabatique ou isotherme du réacteur, ces conditions gouvernant les équilibres chimiques des réactions de méthanation. Ces réactions forment globalement de l'eau et une séparation de cette espèce est par conséquent requise. Concernant les autres espèces (CO₂ et H₂), leurs teneurs respectives peuvent être modifiées en jouant d'une part sur le mode de fonctionnement du réacteur (adiabatique ou isotherme) et d'autre part sur la température ou la pression. Une pression élevée et une faible température vont ainsi permettre de réduire considérablement les teneurs de ces composés. Lorsque l'opération est réalisée en réacteur « adiabatique », une succession d'étapes est par ailleurs nécessaire pour atteindre une qualité de conversion équivalente au réacteur isotherme. En tout état de cause, pour une pression opératoire inférieure à 40 bars, la composition du gaz produit est généralement incompatible avec les spécifications d'injection ou d'utilisation du gaz naturel et des étapes d'amélioration sont nécessaires pour éliminer le CO₂ et/ou le H₂ résiduel. Ainsi, le mode opératoire constitue un verrou pour la simplification de la chaîne des procédés.

On connaît des solutions telles que décrites dans le document US 2013/0317126. Dans ces systèmes, un réacteur de méthanation adiabatique est mis en oeuvre et une partie des produits de méthanation est recirculée en entrée dudit réacteur.

Cette recirculation de produits de méthanation vise, d'après ce document, à ajuster la température des réactifs entrant dans le réacteur de méthanation adiabatique en vue de modérer l'exothermicité de la réaction adiabatique se produisant dans le réacteur.

Dans ces solutions, la température atteinte en entrée du réacteur de méthanation est de l'ordre de 310 à 330°C et la température en sortie de ce réacteur est de l'ordre de 620°C, ce qui induit une conversion peu efficace limitée par la thermodynamique de la réaction et donc la présence de composés indésirables, comme par exemple H₂, CO₂ en excès, dans le flux sorti du réacteur. Cette présence de composés indésirables, notamment du dihydrogène, nécessite une étape de séparation du dihydrogène en aval du réacteur pour répondre par exemple aux spécifications d'injection sur le réseau de distribution ou de transport du gaz naturel.

Le flux est dit aux spécifications d'injection quand celui-ci présente des critères de :
- Pouvoir Calorifique Supérieur, dit « PCS »,
- indice de Wobbe et
- teneur en dihydrogène
compris dans des plages de valeur prédéterminées correspondant aux particularités du réseau de distribution ou de transport du gaz naturel.

On connaît également des solutions telles que décrites dans le document US 3 967 936. Dans ces systèmes, une succession de réacteurs de méthanation adiabatiques est mise en oeuvre et une partie des produits de méthanation est recirculée en entrée de chaque réacteur de la succession.

Cette recirculation de produits de méthanation vise, d'après ce document, à ajuster la température des réactifs entrant dans le réacteur de méthanation adiabatique en vue de modérer l'exothermicité de la réaction adiabatique se produisant dans le réacteur.

De la même manière, ces solutions nécessitent la séparation, en aval du réacteur, de composés indésirables, tels du dihydrogène pour répondre par exemple aux spécifications d'injection sur le réseau de distribution ou de transport du gaz naturel.

On connaît enfin des systèmes tels que décrits dans le document US 2009/0247653. Dans ces systèmes, une succession de trois réacteurs de méthanation adiabatiques est mise en oeuvre, le dernier réacteur de la succession visant produire du méthane de synthèse complémentaire. Dans ces systèmes, une partie des produits de la méthanation du CO et du H₂ est recirculée après le deuxième réacteur vers le flux d'entrée du premier réacteur de la succession pour ajuster le ratio de CO et de H₂ et ajuster la température du flux d'entrée du premier réacteur pour modérer l'exothermicité de la réaction adiabatique se produisant dans le premier réacteur. Le document WO 2015/011503 A1 décrit un dispositif et procédé comprenant un réacteur isotherme de méthanation relié à une conduite d'alimentation de syngas produit par gazéification, la sortie du réacteur étant reliée à un moyen de séparation d'eau, suivi par une séparation de CO2 par adsorption modulée en pression, avant d'envoyer ce gaz naturel de synthèse produit à être injecté dans un réseau gazier.

Ces solutions nécessitent toutefois également la séparation, en aval du réacteur, de composés indésirables, tels du dihydrogène.

Les réacteurs adiabatiques, s'ils ne supposent pas de refroidissement interne au réacteur de méthanation, présentent plusieurs désavantages :
- une pluralité de réacteurs en succession est nécessaire pour obtenir un rendement satisfaisant de méthanation et
- dans le cas de la méthanation du CO, une préparation spécifique du gaz de synthèse, par ajout d'une étape catalytique dite du gaz à l'eau est nécessaire pour obtenir une stœchiométrie satisfaisante.

En contrepartie, la conception des réacteurs adiabatiques est plus simple car ils sont essentiellement constitués d'une enceinte devant résister à des pressions généralement élevées (>30 bar) pour atteindre une conversion satisfaisante.

Dans le cas de la méthanation en réacteur isotherme, la pression opératoire n'a pas besoin d'être aussi importante (<20 bar) mais nécessite la disposition de surfaces immergées au sein de la couche catalytique ce qui génère une complexité de conception et un surcoût lié au système de refroidissement.

Ainsi, les systèmes actuels ne permettent pas de maîtriser la température de réaction dans un réacteur de méthanation isotherme.

En conclusion, les techniques actuelles de l'état de l'art ne permettent pas une maîtrise satisfaisante de l'exothermicité de la réaction isotherme de méthanation et ne donnent pas au dispositif une souplesse satisfaisante aux fluctuations de puissance directement liées à la surproduction électrique. De plus, ces techniques actuelles nécessitent une séparation systématique de H₂ et/ou de CO₂ pour répondre aux spécifications d'injection ou d'utilisation en substitution du gaz naturel du réseau.

Ainsi, les systèmes actuels ne permettent pas la mise aux spécifications d'injection sur un réseau de distribution ou de transport de gaz naturel sans qu'une étape de séparation du dihydrogène, en aval de la réaction de méthanation, ait lieu.

### OBJET DE L'INVENTION

La présente invention vise à remédier à tout ou partie de ces inconvénients.

À cet effet, selon un premier aspect, la présente invention vise un dispositif de production de gaz de synthèse, selon la revendication 1.

Le moyen de séparation d'eau refroidissant le gaz naturel de synthèse, la fourniture d'une partie de ce gaz naturel de synthèse en entrée du réacteur permet un refroidissement du syngas dans le mélange d'entrée, et permet au réacteur de ne pas nécessiter d'échangeur thermique. La conception d'un tel réacteur, notamment en termes de dimensionnement, est d'autant plus simplifiée. De plus, la fourniture du gaz naturel de synthèse déshydraté dans la conduite d'alimentation améliore l'indice de Wobbe et le PCS des produits de la réaction de méthanation par la modification favorable des équilibres réactionnels. Ainsi, le dispositif objet de la présente invention permet un dimensionnement réduit du réacteur ainsi qu'une mise aux spécifications pour le réseau gazier nécessitant peu ou aucun traitement en aval de la réaction de méthanation.

De plus, la mise en oeuvre d'un réacteur isotherme permet la réalisation d'une étape unique de méthanation pour obtenir une conversion efficace en gaz naturel de synthèse et obtenir un gaz de qualité proche des spécifications d'injection sur le réseau de distribution ou de transport du gaz naturel.

Dans des modes de réalisation, le dispositif objet de la présente invention comporte une conduite de déviation, d'une partie des produits chauds de réactions de méthanation, comportant :
- une entrée positionnée entre la sortie du réacteur et le moyen de séparation d'eau et
- une sortie positionnée en amont de l'entrée du réacteur.

Ces modes de réalisation permettent de réguler le débit entrant dans le réacteur de manière à conférer au dispositif une grande flexibilité, quelle que soit la quantité d'énergie électrique produite en amont.

Dans des modes de réalisation, le dispositif objet de la présente invention comporte :
- un moyen de mesure du débit de dihydrogène produit par électrolyse et
- un moyen de régulation du débit de dioxyde de carbone dans la conduite d'alimentation de carbone en fonction du débit de dihydrogène mesuré.

Ces modes de réalisation permettent de réguler la composition de syngas entrant dans le réacteur de méthanation.

Dans des modes de réalisation, le dispositif objet de la présente invention comporte :
- en aval du réacteur, un capteur d'une température du gaz naturel de synthèse et
- en amont de l'entrée du réacteur, un moyen de préchauffage du mélange en fonction de la température captée.

Ces modes de réalisation permettent de contrôler la température du réacteur et d'assurer l'isothermicité de ce réacteur.

Dans des modes de réalisation, le dispositif objet de la présente invention comporte :
- un capteur d'une grandeur physique représentative d'un pouvoir calorifique de combustible ou d'une composition du gaz naturel de synthèse déshydraté et
- un recirculateur, du gaz naturel entré dans la dérivation, commandé en fonction d'une valeur de la grandeur physique captée.

Dans des modes de réalisation, le dispositif objet de la présente invention comporte :
- un moyen de mesure du débit du syngas en aval du lieu du mélange et
- un recirculateur, du gaz naturel chaud entré dans la conduite de déviation, commandé en fonction du débit de syngas mesuré.

Ces modes de réalisation permettent de réguler le débit entrant dans le réacteur en fonction du débit de syngas mesuré.

Dans des modes de réalisation, le moyen de séparation d'eau est configuré pour refroidir les gaz naturels de synthèse à une température comprise entre -5°C et +60°C.

Ces modes de réalisation permettent la séparation de la quasi-totalité de l'eau contenue dans le SNG en sortie du réacteur de méthanation.

Dans des modes de réalisation, le moyen de séparation est configuré pour refroidir les gaz naturels de synthèse à une température inférieure à la température de rosée de l'eau aux conditions de fonctionnement du réacteur considérée.

Dans des modes de réalisation, le réacteur isotherme est un réacteur à lit fluidisé.

Dans des modes de réalisation, le dispositif objet de la présente invention comporte au moins une surface d'échange thermique positionnée dans le lit fluidisé.

Ces modes de réalisation permettent de réguler la température à l'intérieur du réacteur de méthanation.

Ces modes de réalisation permettent d'homogénéiser simplement la température dans la couche catalytique du réacteur isotherme.

Selon un deuxième aspect, la présente invention vise un procédé de production de gaz de synthèse, qui comporte :
- une étape d'électrolyse d'eau pour produire du dioxygène et du dihydrogène,
- une étape d'alimentation de dioxyde de carbone,
- une étape d'injection de dihydrogène, issu de l'étape d'électrolyse, dans une conduite d'alimentation alimentée en dioxyde de carbone, issu de l'étape d'alimentation de dioxyde de carbone, ce dioxyde de carbone et ce dihydrogène formant un syngas,
- une étape de réaction de méthanation comportant :
   - une étape d'entrée dans un réacteur isotherme de méthanation, du syngas, par la conduite d'alimentation de syngas et
   - une étape de sortie pour gaz naturel de synthèse,
- une étape de séparation d'eau comportant :
   - une étape d'entrée pour gaz naturel de synthèse et
   - une étape de sortie pour gaz naturel de synthèse déshydraté et
- une étape de dérivation d'une partie du gaz naturel de synthèse déshydraté en sortie de l'étape de séparation d'eau vers la conduite d'alimentation de syngas pour qu'un mélange, du syngas et du gaz naturel de synthèse dérivé, soit fourni au réacteur.

Le procédé objet de la présente invention correspondant au dispositif objet de la présente invention, les buts, avantages et caractéristiques particulières de ce procédé sont identiques à ceux du dispositif objet de la présente invention. Ces buts, avantages et caractéristiques ne sont pas rappelés ici.

Dans des modes de réalisation, le procédé objet de la présente invention comporte une étape de déviation d'une partie des produits chauds de réactions de méthanation vers l'amont de l'étape de méthanation.

### BRÈVE DESCRIPTION DES FIGURES

D'autres avantages, buts et caractéristiques particulières de l'invention ressortiront de la description non limitative qui suit d'au moins un mode de réalisation particulier du dispositif et du procédé de production de gaz de synthèse objets de la présente invention, en regard des dessins annexés, dans lesquels :
- la figure 1 représente, schématiquement, un mode de réalisation particulier du dispositif objet de la présente invention,
- la figure 2 représente, schématiquement et sous forme d'un logigramme, une succession d'étapes particulières du procédé objet de la présente invention,
- la figure 3 représente, sous forme d'une courbe, l'indice de Wobbe de gaz de synthèse obtenu par le mode de réalisation du dispositif figure 1 et le procédé objets de la présente invention,
- la figure 4 représente, sous forme d'une courbe, le PCS de gaz de synthèse obtenu par le mode de réalisation du dispositif figure 1 et le procédé objets de la présente invention,
- la figure 5 représente, sous forme d'une courbe, la diminution du flux molaire de dihydrogène dans les gaz naturels en sortie du réacteur de méthanation lors de la mise en oeuvre du mode de réalisation du dispositif figure 1 et du procédé objets de la présente invention,
- la figure 6 représente, sous forme d'une courbe, l'exothermicité de la réaction de méthanation lors de la mise en oeuvre mode de réalisation du dispositif figure 1 et du procédé objets de la présente invention et
- la figure 7 représente, schématiquement, un exemple de système mis en oeuvre dans l'état de l'art.

### DESCRIPTION D'EXEMPLES DE RÉALISATION DE L'INVENTION

La présente description est donnée à titre non limitatif, chaque caractéristique d'un mode de réalisation pouvant être combinée à toute autre caractéristique de tout autre mode de réalisation de manière avantageuse.

On note dès à présent que les figures ne sont pas à l'échelle.

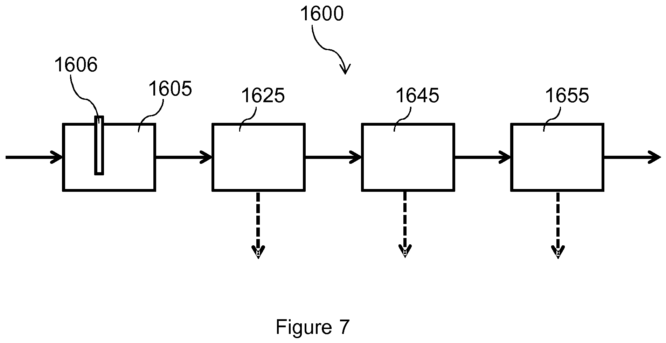

On observe, sur la figure 7, une vue schématique d'un exemple de système 80 mis en oeuvre dans l'état de l'art.

Dans ces systèmes 1600, des réactifs de méthanation entrent dans un réacteur 1605 de méthanation qui peut faire partie d'une série (non représentée) de tels réacteurs.

En sortie de l'étape de méthanation, l'eau est séparée des produits de méthanation via un moyen de séparation 1625 de cette eau, telle un échangeur thermique par exemple.

Le gaz naturel de synthèse déshydraté est ensuite traité par un moyen de séparation 1645 du dioxyde de carbone.

Enfin, le gaz naturel de synthèse est traité par un moyen de séparation 1655 du dihydrogène pour que ce gaz naturel de synthèse soit aux spécifications d'injection sur un réseau de distribution.

Les étapes de séparation d'eau, de dioxyde de carbone et de dihydrogène peuvent être réalisées dans n'importe quel ordre.

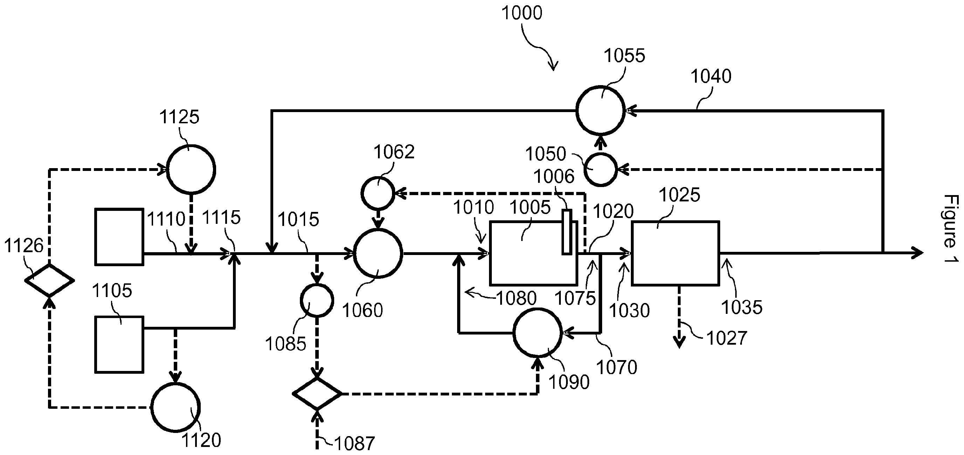

On observe, sur la figure 1, qui n'est pas à l'échelle, une vue schématique d'un mode de réalisation du dispositif 1000 objet de la présente invention. Ce dispositif 1000 de production de gaz de synthèse, comporte :
- un moyen 1105 d'électrolyse d'eau pour produire du dioxygène et du dihydrogène,
- une conduite 1110 d'alimentation de dioxyde de carbone,
- un moyen 1115 d'injection de dihydrogène dans une conduite 1015 d'alimentation alimentée en dioxyde de carbone, ce dioxyde de carbone et ce dihydrogène formant un syngas,
- un réacteur 1005 isotherme de méthanation comportant :
   - une entrée 1010, pour le syngas, reliée à la conduite 1015 d'alimentation de syngas et
   - une sortie 1020 pour gaz naturel de synthèse,
- un moyen 1025 de séparation d'eau comportant :
   - une entrée 1030 pour gaz naturel de synthèse,
   - une sortie 1035 pour gaz naturel de synthèse déshydraté et
   - une sortie 1027 pour l'eau séparée du gaz naturel de synthèse et
- une dérivation 1040 d'une partie du gaz naturel de synthèse déshydraté depuis la sortie du moyen de séparation d'eau vers la conduite d'alimentation de syngas pour qu'un mélange, du syngas et du gaz naturel de synthèse dérivés, soit fourni au réacteur.

Le réacteur 1005 est, préférentiellement, un réacteur isotherme de méthanation à lit fluidisé fonctionnant à une température prédéterminée. La fluidisation du catalyseur par le mélange réactionnel permet une homogénéisation quasi-parfaite des températures en tout point de la couche catalytique et le réacteur 1005 peut être assimilé à un réacteur isotherme.

Dans des variantes, ce réacteur 1005 peut être un réacteur à eau bouillante, connu de l'homme du métier sous l'abréviation « BWR » (pour Boiling Water Reactor). Dans d'autres variantes, ce réacteur 1005 peut être un réacteur à lit refroidit par les parois ou un réacteur échangeur.

Dans des modes de réalisation, le réacteur 1005 comporte au moins une surface 1006 d'échange thermique positionnée dans le lit fluidisé du réacteur 1005 isotherme.

Cette surface 1006 est, par exemple, un tube configuré pour former une boucle de circulation d'un fluide depuis l'extérieur du réacteur 1005 vers l'intérieur de ce réacteur 1005, le fluide étant refroidit à l'extérieur du réacteur 1005.

Ce fluide est, par exemple, de la vapeur d'eau saturée ou surchauffée.

Ce réacteur 1005 est configuré pour réaliser la méthanation du dioxyde de carbone.

Ce réacteur 1005 comporte l'entrée 1010 pour syngas qui est, par exemple, un orifice du réacteur 1005 muni d'une connectique (non représentée) compatible avec la conduite d'alimentation 1015 de syngas.

Les gaz naturels de synthèse quittent le réacteur 1005 par la sortie 1020 du réacteur. Cette sortie 1020 est, par exemple, un orifice relié à une connectique (non représentée) permettant la fixation d'une conduite étanche de transport du gaz naturel de synthèse.

Le moyen de séparation 1025 d'eau est, par exemple, un échangeur thermique pour refroidir les gaz naturels de synthèse à une température inférieure à la température de rosée de l'eau. Cette température est de préférence comprise entre -5°C et +60°C. Préférentiellement, cette température est comprise entre 5°C et 40°C.

Dans des modes de réalisation préférentiels, le moyen 1025 de séparation est configuré pour refroidir les gaz naturels de synthèse à une température inférieure à la température de rosée de l'eau aux conditions de fonctionnement du réacteur 1005 considérée.

L'eau ainsi séparée est collectée par une sortie 1027 pour eau et peut être utilisée par le moyen 1105 d'électrolyse d'eau.

Le moyen de séparation 1025 d'eau comporte l'entrée 1030 pour gaz naturel de synthèse. Cette entrée 1030 est, par exemple, un orifice associé à une connectique (non représentée) pour être relié à la conduite étanche de transport du gaz naturel de synthèse issu du réacteur 1005.

Le moyen de séparation 1025 d'eau comporte la sortie 1035 pour gaz naturel de synthèse déshydraté. Cette sortie 1035 est, par exemple, un orifice associé à une connectique (non représentée) pour être reliée à une conduite (non référencée) étanche de transport du gaz naturel de synthèse déshydraté.

La dérivation 1040 est, par exemple, une conduite étanche reliée à la conduite de transport du gaz naturel de synthèse déshydraté pour capter une partie du flux traversant cette conduite de transport.

Cette dérivation 1040 injecte les gaz naturels de synthèse déshydraté dans la conduite d'alimentation 1015 de syngas.

De cette manière, le syngas et le gaz naturel de synthèse déshydraté, refroidis par le processus de séparation de l'eau, forment un mélange qui, dans le réacteur 1005, réduit l'exothermicité de la réaction de méthanation, et améliore ainsi les spécifications du gaz naturel de synthèse issu du réacteur 1005.

En particulier, le mélange réalisé permet d'éviter la séparation avale de H₂ dans le SNG.

La conduite d'alimentation 1015 est étanche et reçoit, par exemple, du CO₂ et du H₂ issu d'un moyen d'électrolyse d'eau.

Le moyen d'électrolyse 1105 est, par exemple, un électrolyseur pour eau, configuré pour séparer des molécules d'eau en molécules de dioxygène et en molécules de dihydrogène.

Le dioxyde de carbone dans la conduite d'alimentation 1110 est conditionné par compression et par traitement des impuretés en amont du dispositif 1000.

Le moyen d'injection 1115 est, par exemple, une vanne d'injection de dihydrogène dans la conduite d'alimentation 1015.

Dans des modes de réalisation préférentiels, tels que celui représenté en figure 1, le dispositif 1000 comporte :
- un moyen de mesure 1120 du débit de dihydrogène produit par électrolyse et
- un moyen 1125 de conditionnement de dioxyde de carbone dans la conduite 1015 d'alimentation de carbone en fonction du débit de dihydrogène mesuré.

Le moyen 1125 de conditionnement de dioxyde de carbone est, par exemple, un circuit électronique de commande qui multiplie le débit de dihydrogène mesuré par un coefficient 1126 de consigne déterminé. Le résultat de cette multiplication est communiqué à une vanne de régulation de débit de dioxyde de carbone, ce résultat correspondant à une consigne de débit.

Pour une production optimale de CH₄, le ratio H₂/CO₂ doit être ajusté en proche stœchiométrie, c'est à dire compris entre 3,9 et 4,1 afin de limiter les réactifs en excès. Ce ratio est contrôlé par le biais d'une régulation du débit de CO₂ en fonction de la mesure de débit du flux H₂ et d'un facteur stœchiométrique.

Dans des modes de réalisation préférentiels, tels que celui représenté en figure 1, le dispositif 1000 comporte :
- en aval du réacteur 1005 et en amont du moyen 1025 de séparation d'eau, un capteur 1062 d'une température du gaz naturel de synthèse et
- en amont de l'entrée du réacteur, un moyen 1060 de préchauffage, du mélange en fonction de la température captée.

Le moyen 1060 de préchauffage chauffe préférentiellement le mélange à une température supérieure à la température de rosée du mélange pour éviter toute pré-condensation du mélange et inférieure à la température opératoire du réacteur pour permettre le refroidissement du réacteur 1005.

Dans des modes de réalisation préférentiels, tels que celui représenté en figure 1, le moyen 1060 de préchauffage du mélange chauffe ce mélange à une température comprise entre 50°C et 300°C. Préférentiellement, le moyen 1060 de préchauffage du mélange chauffe ce mélange à une température supérieure à 50°C et inférieure à la température de fonctionnement du réacteur 1005.

Ce moyen de préchauffage 1060 est, par exemple, un échangeur thermique pour chauffer le syngas.

La température du moyen de préchauffage 1060 varie en fonction de la température captée et d'une température-consigne prédéterminée. Si la température captée est supérieure à la température-consigne, la puissance du moyen de préchauffage 1060 est réduite. Inversement, la puissance du moyen de préchauffage 1060 est augmentée lorsque la température captée est inférieure à la température-consigne.

Dans des modes de réalisation préférentiels, tels que celui représenté en figure 1, le dispositif 1000 comporte une conduite 1070 de déviation, d'une partie des produits chauds de réactions de méthanation, comportant :
- une entrée 1075 positionnée entre la sortie du réacteur 1005 et le moyen 1025 de séparation d'eau et
- une sortie 1080 positionnée en amont de l'entrée 1010 du réacteur 1005.

La conduite de déviation 1070 est, par exemple, une conduite étanche. L'entrée 1075 est, par exemple, un orifice débouchant sur l'intérieur de la conduite de transport de gaz naturel de synthèse, en amont du moyen de séparation 1025 d'eau. La sortie 1080 est, par exemple, un orifice d'injection du gaz naturel de synthèse dans le mélange, en aval du moyen de préchauffage 1060.

Les gaz naturels de synthèse, chauds, permettent de maintenir le débit dans le réacteur 1005.

Le débit du syngas est entièrement fonction des quantités d'électricité disponibles. Afin de conserver la stabilité de conversion au cours de l'opération de méthanation, les conditions hydrodynamiques doivent être maintenues les plus constantes possibles. Néanmoins, si la puissance électrique disponible est insuffisante et par conséquent le débit de syngas est réduit, il convient de maintenir un débit global entrant dans le réacteur 1005 constant ou d'opter pour une technologie très flexible. Même dans le cas du lit fluidisé capable de fonctionner dans une gamme de débits d'un à six, des débits trop faibles peuvent engendrer une dégradation du refroidissement et donc de la conversion. Pour pallier cette difficulté, en cas de baisse importante de débit de syngas, le flux en sortie de moyen de préchauffage 1060 est complété par une recirculation chaude provenant directement de la sortie 1020 du réacteur 1005 par le biais de la conduite de déviation 1070. Le fait d'utiliser un fluide de recirculation chaud ne provoque pas de déséquilibre thermique du réacteur 1005 mais permet de rendre le dispositif 1000 très flexible.

Dans des modes de réalisation préférentiels, tels que celui représenté en figure 1, le dispositif 1000 comporte :
- un moyen de mesure 1085 du débit du syngas en aval du lieu du mélange et en amont du réacteur 1005 et
- un recirculateur 1090, du gaz naturel entré dans la conduite 1070 de déviation, commandé en fonction du débit mesuré.

Le moyen de mesure 1085 du débit peut être de tout type connu de l'homme du métier qui soit adapté à mesurer le débit de gaz, tel un anémomètre, un débitmètre à effet Coriolis, un débitmètre à effet vortex ou un débitmètre électromagnétique par exemple.

Le recirculateur 1090 est similaire au recirculateur 1055 en termes structurels. La commande de ce recirculateur 1090 est réalisée en fonction du débit mesuré par le moyen de mesure 1085 du débit et d'une valeur de débit-consigne 1087. Si le débit mesuré est inférieur à un débit-consigne 1087 prédéterminé, le recirculateur 1090 est actionné de manière à combler la différence entre le débit mesuré et le débit-consigne 1087 par un débit équivalent de gaz naturel de synthèse.

Dans des modes de réalisation préférentiels, tels que celui représenté en figure 1, le dispositif 1000 comporte :
- un capteur 1050 d'une grandeur physique représentative d'un pouvoir calorifique de combustible ou d'une composition du gaz naturel de synthèse déshydraté et
- un recirculateur 1055, du gaz naturel chaud entré dans la dérivation, commandé en fonction d'une valeur de la grandeur physique captée.

Le capteur 1050 est, par exemple, un circuit électronique d'estimation du PCS associé à un chromatographe en phase gazeuse déterminant une composition du SNG dans la dérivation 1040 ou dans la sortie 1035.

Le recirculateur 1055 vise à compenser les pertes de charge, ou de pression, successivement dans le moyen de préchauffage 1060, le réacteur 1005, le moyen de séparation 1025 d'eau particulièrement pour le dispositif 1000 décrit en regard de la figure 1 et de l'ensemble des canalisations de connections de ces différents équipements.

Une telle perte de charge est estimée entre 200 et 800 mbar, par exemple. Le recirculateur 1055 est, par exemple, un ventilateur, un surpresseur ou un éjecteur.

Dans le mode de réalisation de la figure 1, le dispositif 1000 comporte un moyen de mesure 1085 du débit du syngas en aval du lieu du mélange, le recirculateur 1090, du gaz naturel entré dans la conduite 1070 de déviation, étant commandé en fonction du débit de syngas mesuré.

Grâce aux caractéristiques décrites en regard de la figure 1, et à une pression opératoire proche de dix bars, et pour un débit donné, ce mode de réalisation permet d'éliminer les étapes successives de séparation de H₂ et de CO₂.

La mise en oeuvre du dispositif 1000, soit l'objet de la présente invention, permet d'obtenir du gaz de synthèse proche des spécifications du réseau gazier nécessitant peu d'opérations supplémentaires.

De plus, le dispositif 1000 peut ainsi être mis en oeuvre pour un domaine de pression compris entre 1 bar et 100 bars et un domaine de températures prédéterminées compris entre 150°C et 700°C.

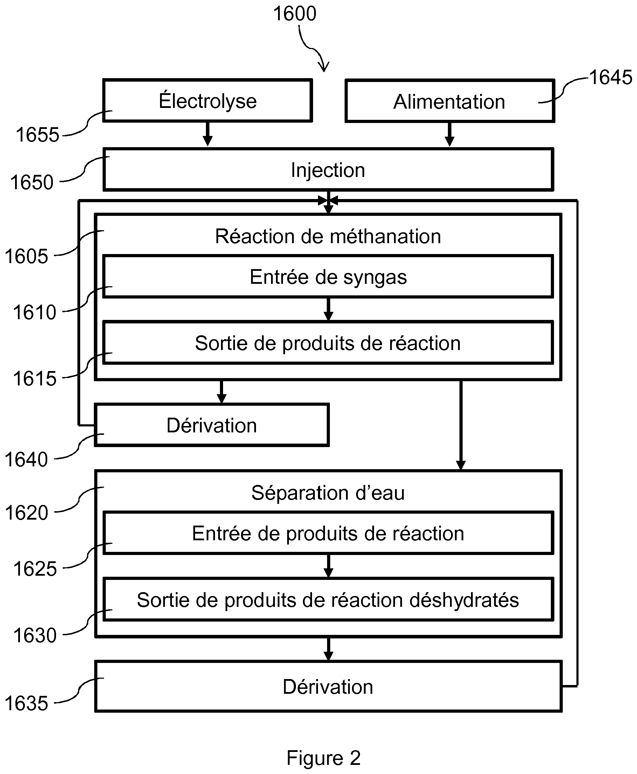

On observe, sur la figure 2, sous forme d'un logigramme d'étapes, un mode de réalisation particulier du procédé 1600 objet de la présente invention. Ce procédé 1600 de production de gaz de synthèse comporte :
- une étape 1640 d'électrolyse d'eau pour produire du dioxygène et du dihydrogène,
- une étape 1645 d'alimentation de dioxyde de carbone,
- une étape 1650 d'injection de dihydrogène, issu de l'étape 1640 d'électrolyse, dans une conduite d'alimentation alimentée en dioxyde de carbone, issu de l'étape 1645 d'alimentation de dioxyde de carbone, ce dioxyde de carbone et ce dihydrogène formant un syngas,
- une étape 1605 de réaction de méthanation comportant :
   - une étape d'entrée 1610 dans un réacteur isotherme de méthanation, du syngas, par la conduite d'alimentation de syngas et
   - une étape 1615 de sortie pour gaz naturel de synthèse,
- une étape 1620 de séparation d'eau comportant :
   - une étape 1625 d'entrée pour gaz naturel de synthèse et
   - une étape 1630 de sortie pour gaz naturel de synthèse déshydraté,
- une étape 1635 de dérivation d'une partie du gaz naturel de synthèse déshydraté en sortie de l'étape de séparation d'eau vers la conduite d'alimentation de syngas pour qu'un mélange, du syngas et du gaz naturel de synthèse dérivés, soit fourni au réacteur et
- préférentiellement, une étape 1655 de déviation, d'une partie des produits chauds de réactions de méthanation, issus de l'étape de réaction 1605, vers l'amont de l'étape de méthanation.

Ce procédé 1600 est mis en oeuvre, par exemple, par le dispositif 1000 objet de la présente invention et décrit en regard de la figure 1.

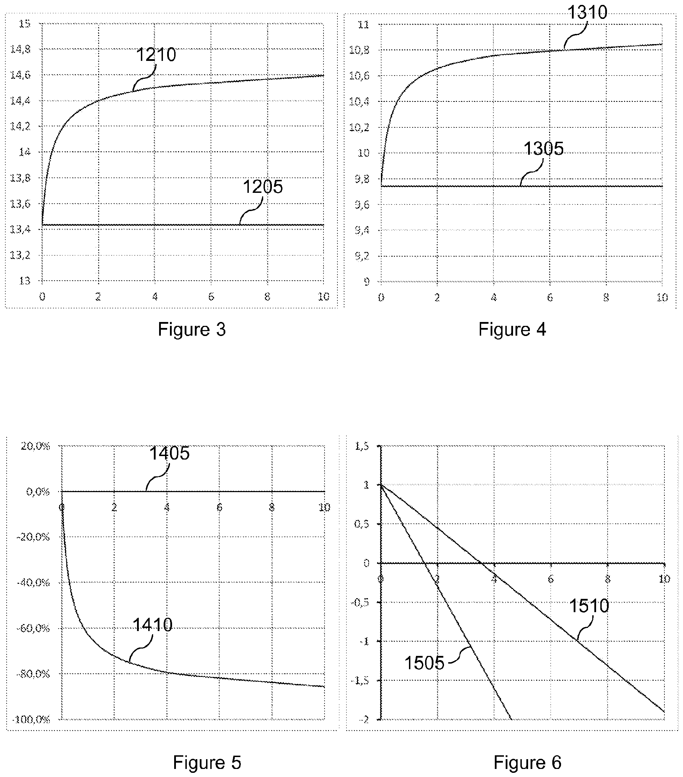

On observe, sur les figures 3 à 6, le résultat des simulations réalisées pour le dispositif 1000 objet de la présente invention.

On observe, sur la figure 3, en ordonnée, l'indice de Wobbe du gaz naturel de synthèse produit par le dispositif 1000, en fonction du taux de recirculation, en abscisse, et de la nature du gaz naturel de synthèse recirculé en entrée du réacteur 1005 de méthanation. On appelle « taux de recirculation », la quantité de gaz sorti du moyen de séparation 1025 réinjectée dans la conduite 1015 divisée par la quantité totale de gaz sorti du moyen de séparation 1025.

On observe, notamment, que la recirculation de gaz naturel de synthèse humide 1205 n'a pas d'effet sur l'indice de Wobbe du gaz naturel de synthèse produit par le dispositif.

On observe, de plus, que la recirculation de gaz naturel de synthèse déshydraté 1210 améliore l'indice de Wobbe du gaz naturel de synthèse produit par le dispositif.

On observe, sur la figure 4, en ordonnée, le PCS du gaz naturel de synthèse produit par le dispositif 1000, en fonction du taux de recirculation, en abscisse, et de la nature du gaz naturel de synthèse recirculé en entrée du réacteur 1005 de méthanation.

On observe, notamment, que la recirculation de gaz naturel de synthèse humide 1305 n'a pas d'effet sur le PCS du gaz naturel de synthèse produit par le dispositif.

On observe, de plus, que la recirculation de gaz naturel de synthèse déshydraté 1310 améliore le PCS du gaz naturel de synthèse produit par le dispositif.

On observe, sur la figure 5, en ordonnée, la variation relative du flux molaire de H₂ en sortie du dispositif 1000 en fonction du taux de recirculation, en abscisse, et de la nature du gaz naturel de synthèse recirculé en entrée du réacteur 1005 de méthanation par rapport au flux molaire de H₂ dans un dispositif sans recirculation.

On observe, notamment, que la recirculation de gaz naturel de synthèse humide 1405 n'a pas d'effet sur le flux molaire de H₂ en sortie du dispositif.

On observe, de plus, que la recirculation de gaz naturel de synthèse déshydraté 1410 provoque une réduction du flux molaire de H₂ en sortie du dispositif.

La figure 6 permet de visualiser l'évolution de l'exothermicité normalisée du réacteur, c'est à dire la chaleur à évacuer par rapport à un cas sans recirculation, en fonction du taux de recirculation pour la configuration de référence et le dispositif 1000 décrits ci-dessus.

On observe, sur la figure 6, en ordonnée, l'exothermicité de la réaction de méthanation du dispositif 1000 en fonction du taux de recirculation, en abscisse, et de la nature du gaz naturel de synthèse recirculé en entrée du réacteur 1005 de méthanation.

On observe, notamment, que la recirculation de gaz naturel de synthèse humide 1505 réduit l'exothermicité de la réaction de méthanation.

On observe, de plus, que la recirculation de gaz naturel de synthèse déshydraté 1510 réduit également l'exothermicité du réacteur de méthanation.

Il apparait que l'augmentation du taux de recirculation entraine une baisse linéaire de l'exothermicité du réacteur. Ici, le SNG recirculé joue le rôle de volant thermique qui est plus marqué en présence de H₂O du fait d'une capacité calorifique plus importante. Le fait d'atteindre un niveau de recirculation correspondant à une température idéale de fonctionnement du dispositif 1000, permet de s'affranchir de l'échangeur interne du réacteur et de la séparation de H₂ de mise aux spécifications. Au-delà, le réacteur est allothermique et nécessite donc un appoint de chaleur pour entretenir les réactions.

Les fractions molaires des espèces H₂, CO₂ et CH₄ en fonction du taux de recirculation pour la configuration simulée évolue dans le sens de l'amélioration de la qualité du SNG avec le dispositif 1000 de recirculation du SNG déshydraté.

## Revendications

1. Dispositif (1000) de production de gaz de synthèse, **caractérisé en ce qu'**il comporte :
- un moyen (1105) d'électrolyse d'eau pour produire du dioxygène et du dihydrogène,
- une conduite (1110) d'alimentation de dioxyde de carbone,
- un moyen (1115) d'injection de dihydrogène issue du moyen d'électrolyse dans une conduite (1015) d'alimentation alimentée en dioxyde de carbone par la conduite d'alimentation de dioxyde de carbone (1110), ce dioxyde de carbone et ce dihydrogène formant un syngas,
- un réacteur (1005) isotherme de méthanation comportant :
- une entrée (1010), pour le syngas, reliée à la conduite (1015) d'alimentation de syngas et
- une sortie (1020) pour gaz naturel de synthèse,
- un moyen (1025) de séparation d'eau comportant :
- une entrée (1030) pour gaz naturel de synthèse reliée à la sortie pour gaz naturel de synthèse et
- une sortie (1035) pour gaz naturel de synthèse déshydraté et
- une dérivation (1040) d'une partie du gaz naturel de synthèse déshydraté depuis la sortie du moyen de séparation d'eau vers la conduite d'alimentation (1015) de syngas pour qu'un mélange, du syngas et du gaz naturel de synthèse dérivés, soit fourni au réacteur.

2. Dispositif (1000) selon la revendication 1, qui comporte :
- un moyen de mesure (1120) du débit de dihydrogène produit par électrolyse et
- un moyen (1125) de conditionnement du débit de dioxyde de carbone dans la conduite (1015) d'alimentation de carbone en fonction du débit de dihydrogène mesuré.

3. Dispositif (1000) selon l'une des revendications 1 à 2, qui comporte :
- en aval du réacteur (1005) et en amont du moyen (1025) de séparation d'eau, un capteur (1062) d'une température du gaz naturel de synthèse et
- en amont de l'entrée du réacteur, un moyen (1060) de préchauffage, du mélange en fonction de la température captée.

4. Dispositif (1000) selon l'une des revendications 1 à 3, qui comporte :
- un capteur (1050) d'une grandeur physique représentative d'un pouvoir calorifique de combustible ou d'une composition du gaz naturel de synthèse déshydraté et
- un recirculateur (1055), du gaz naturel entré dans la dérivation, commandé en fonction d'une valeur de la grandeur physique captée.

5. Dispositif (1000) selon l'une des revendications 1 à 4, qui comporte une conduite (1070) de déviation, d'une partie des produits chauds de réactions de méthanation, comportant :
- une entrée (1075) positionnée entre la sortie du réacteur (1005) et le moyen (1025) de séparation d'eau et
- une sortie (1080) positionnée en amont de l'entrée du réacteur.

6. Dispositif (1000) selon l'une des revendications 1 à 5, qui comporte :
- un moyen de mesure (1085) du débit du syngas en aval du lieu du mélange et
- un recirculateur (1090), du gaz naturel chaud entré dans la conduite (1070) de dérivation, commandé en fonction du débit de syngas mesuré.

7. Dispositif (1000) selon l'une des revendications 1 à 6, dans lequel le moyen (1025) de séparation est configuré pour refroidir les gaz naturels de synthèse à une température comprise entre -5°C et +60°C.

8. Dispositif (1000) selon la revendication 7, dans lequel le moyen (1025) de séparation d'eau est configuré pour refroidir les gaz naturels de synthèse à une température inférieure à la température de rosée de l'eau aux conditions de fonctionnement du réacteur (1005) considérée.

9. Dispositif (1000) selon les revendications 7 à 8, dans lequel le moyen (1025) de séparation est configuré pour refroidir les gaz naturels de synthèse à une température en dessous de la température de rosée aux conditions de fonctionnement du réacteur (1005).

10. Dispositif (1000) selon l'une des revendications 1 à 9, dans lequel le réacteur (1005) isotherme est un réacteur à lit fluidisé.

11. Dispositif (1000) selon la revendication 10, qui comporte au moins une surface (1006) d'échange thermique positionnée dans le lit fluidisé.

12. Procédé (1600) de production de gaz de synthèse, **caractérisé en ce qu'**il comporte :
- une étape (1640) d'électrolyse d'eau pour produire du dioxygène et du dihydrogène,
- une étape (1645) d'alimentation de dioxyde de carbone,
- une étape (1650) d'injection de dihydrogène, issu de l'étape d'électrolyse, dans une conduite d'alimentation alimentée en dioxyde de carbone, issu de l'étape d'alimentation de dioxyde de carbone, ce dioxyde de carbone et ce dihydrogène formant un syngas,
- une étape (1605) de réaction de méthanation comportant :
- une étape d'entrée (1610) dans un réacteur isotherme de méthanation, du syngas, par la conduite d'alimentation de syngas et
- une étape (1615) de sortie pour gaz naturel de synthèse,
- une étape (1620) de séparation d'eau comportant :
- une étape (1625) d'entrée pour gaz naturel de synthèse et
- une étape (1630) de sortie pour gaz naturel de synthèse déshydraté,
- une étape (1635) de dérivation d'une partie du gaz naturel de synthèse déshydraté en sortie de l'étape de séparation d'eau vers la conduite d'alimentation de syngas pour qu'un mélange, du syngas et du gaz naturel de synthèse dérivés, soit fourni au réacteur.

13. Procédé (1600) selon la revendication 12, qui comporte une étape 1655 de déviation, d'une partie des produits chauds de réactions de méthanation vers l'amont de l'étape de méthanation.

## Patentansprüche

1. Vorrichtung (1000) zum Erzeugen von Synthesegas, **dadurch gekennzeichnet, dass** sie umfasst:
- ein Elektrolysemittel (1105) für Wasser zum Erzeugen des Disauerstoffs und des Diwasserstoffs,
- eine Leitung (1110) zur Versorgung mit Kohlenwasserstoff,
- ein Mittel (1115) zum Einschießen von Diwasserstoff, der aus dem Elektrolysemittel stammt, in eine Leitung (1015) zur Versorgung mit Kohlenwasserstoff durch die Leitung zum Versorgen mit Kohlendioxid (1110), wobei dieses Kohlendioxid und dieser Diwasserstoff ein Synthesegas bilden,
- einen Isotherm-Reaktor (1005) zur Methanerzeugung, umfassend:
- einen Eingang (1010) für das Synthesegas, der an die Versorgungsleitung (1015) für Synthesegas angeschlossen ist, und
- einen Ausgang (1020) für Synthese-Erdgas,
- ein Abscheidemittel (1025) für Wasser, umfassend:
- einen Eingang (1030) für Synthese-Erdgas, der an den Ausgang für Synthese-Erdgas angeschlossen ist, und
- einen Ausgang (1035) für entwässertes Synthese-Erdgas und
- eine Ableitung (1040) eines Teils des entwässerten Synthese-Erdgases ab dem Ausgang des Abscheidemittels für Wasser zu der Versorgungsleitung (1015) für Synthesegas, damit dem Reaktor eine Mischung aus abgeleitetem Synthesegas und abgeleitetem Synthese-Erdgas geliefert wird.

2. Vorrichtung (1000) gemäß Anspruch 1, die umfasst:
- ein Messmittel (1120) des Diwasserstoff-Durchsatzes, der per Elektrolyse erzeugt ist, und
- ein Mittel (1125) zum Aufbereiten des Kohlenwasserstoff-Durchsatzes in der Leitung (1015) zur Versorgung mit Kohlenstoff in Abhängigkeit von dem gemessenen Diwasserstoff-Durchsatz.

3. Vorrichtung (1000) gemäß einem der Ansprüche 1 bis 2, die umfasst:
- nach dem Reaktor (1005) und vor dem Abscheidemittel (1025) für Wasser einen Sensor (1062) einer Temperatur des Synthese-Erdgases und
- vor dem Eingang des Reaktors ein Mittel (1060) zum Vorheizen der Mischung in Abhängigkeit von der erfassten Temperatur.

4. Vorrichtung (1000) gemäß einem der Ansprüche 1 bis 3, die umfasst:
- einen Sensor (1050) einer physikalischen Größe, die einen Heizwert des Brennmaterials oder eine Zusammensetzung des entwässerten Synthese-Erdgases darstellt, und
- einen Rücklauf (1055) des in die Ableitung eingetretenen Erdgases, der in Abhängigkeit von einem Wert der erfassten physikalischen Größe gesteuert ist.

5. Vorrichtung (1000) gemäß einem der Ansprüche 1 bis 4, die eine Ableitungsleitung (1070) eines Teils der heißen Produkte aus Methanerzeugungsreaktionen umfasst, umfassend:
- einen Eingang (1075), der zwischen dem Ausgang des Reaktors (1005) und dem Abscheidemittel (1025) für Wasser angeordnet ist, und
- einen Ausgang (1080), der vor dem Eingang des Reaktors angeordnet ist.

6. Vorrichtung (1000) gemäß einem der Ansprüche 1 bis 5, die umfasst:
- ein Messmittel (1085) des Durchsatzes des Synthesegases nach dem Ort der Mischung und
- einen Rücklauf (1090) des in die Ableitungsleitung (1070) eingetretenen heißen Erdgases, der in Abhängigkeit von dem gemessenen Durchsatz des Synthesegases gesteuert ist.

7. Vorrichtung (1000) gemäß einem der Ansprüche 1 bis 6, bei der das Abscheidemittel (1025) zum Abkühlen der Synthese-Erdgase auf eine zwischen -5° C und +60° C inbegriffene Temperatur ausgestaltet ist.

8. Vorrichtung (1000) gemäß Anspruch 7, bei der das Abscheidemittel (1025) für Wasser zum Abkühlen der Synthese-Erdgase auf eine Temperatur ausgestaltet ist, die unter der Taupunkttemperatur des Wassers bei den betrachteten Betriebsbedingungen des Reaktors (1005) liegt.

9. Vorrichtung (1000) gemäß den Ansprüchen 7 bis 8, bei der das Abscheidemittel (1025) zum Abkühlen der Synthese-Erdgase auf eine Temperatur ausgestaltet ist, die unter der Taupunkttemperatur bei den Betriebsbedingungen des Reaktors (1005) liegt.

10. Vorrichtung (1000) gemäß einem der Ansprüche 1 bis 9, bei der der Isotherm-Reaktor ein Wirbelbett-Reaktor ist.

11. Vorrichtung (1000) gemäß Anspruch 10, die wenigstens eine Oberfläche (1006) zum Wärmetausch umfasst, die im Wirbelbett angeordnet ist.

12. Vorrichtung (1600) zum Erzeugen von Synthesegas, **dadurch gekennzeichnet, dass** sie umfasst:
- ein Elektrolysemittel (1640) für Wasser zum Erzeugen des Disauerstoffs und des Diwasserstoffs,
- einen Schritt (1645) zur Versorgung mit Kohlenwasserstoff,
- einen Schritt (1650) zum Einschießen von Diwasserstoff, der aus dem Elektrolyseschritt stammt, in eine Leitung zur Versorgung mit Kohlenwasserstoff, der aus dem Schritt zum Versorgen mit Kohlendioxid stammt, wobei dieses Kohlendioxid und dieser Diwasserstoff ein Synthesegas formen,
- einen Reaktionsschritt zur Methanerzeugung (1605), umfassend:
- einen Eingangsschritt (1610) in einen Isotherm-Reaktor zur Methanerzeugung des Synthesegases durch die Versorgungsleitung für Synthesegas und
- einen Ausgangsschritt (1615) für Synthese-Erdgas,
- einen Abscheideschritt (1620) für Wasser, umfassend:
- einen Eingangsschritt (1625) für Synthese-Erdgas und
- einen Ausgangsschritt (1630) für entwässertes Synthese-Erdgas und
- einen Ableitungsschritt (1635) eines Teils des entwässerten Synthese-Erdgases am Ausgang des Abscheideschritts für Wasser zu der Versorgungsleitung für Synthesegas, damit dem Reaktor eine Mischung aus abgeleitetem Synthesegas und abgeleitetem Synthese-Erdgas geliefert wird.

13. Vorrichtung (1600) gemäß Anspruch 12, die einen Ableitungsschritt 1655 eines Teils der heißen Produkte aus Methanerzeugungsreaktionen nach oben zum Methanerzeugungsschritt umfasst.

## Claims

1. Synthetic gas production device (1000), **characterized in that** it comprises:
- a water electrolysis means (1105) for producing oxygen and hydrogen;
- a carbon dioxide supply channel (1110);
- a means (1115) for injecting hydrogen, output from the electrolysis means, into a supply channel (1015) supplied with carbon dioxide by the carbon dioxide supply channel (1110), this carbon dioxide and this hydrogen forming a syngas;
- an isothermal methanation reactor (1005) comprising:
- an inlet (1010) for the syngas connected to the syngas supply channel (1015), and
- an outlet (1020) for synthetic natural gas;
- a water separation means (1025) comprising:
- an inlet (1030) for synthetic natural gas connected to the synthetic natural gas outlet, and
- an outlet (1035) for dehydrated synthetic natural gas; and
- a bypass (1040) for a portion of the dehydrated synthetic natural gas from the outlet of the water separation means to the syngas supply channel (1015) in order to provide a mixture of the bypassed syngas and synthetic natural gas to the reactor.

2. Device (1000) according to claim 1, which comprises:
- a means (1120) for measuring the flow rate of hydrogen produced by electrolysis; and
- a means (1125) for commanding the flow rate of carbon dioxide in the carbon supply channel (1015) as a function of the hydrogen flow rate measured.

3. Device (1000) according to one of claims 1 to 2, which comprises:
- downstream from the reactor (1005) and upstream from the water separation means (1025), a sensor (1062) of a temperature of the synthetic natural gas; and
- upstream from the input to the reactor, a means (1060) for preheating the mixture as a function of the temperature measured.

4. Device (1000) according to one of claims 1 to 3, which comprises:
- a sensor (1050) of a physical magnitude representative of a fuel heating value or a composition of the dehydrated synthetic natural gas; and
- a recirculator (1055) of natural gas input into the bypass, controlled as a function of a value of the physical magnitude measured.

5. Device (1000) according to one of claims 1 to 4, which comprises a bypass channel (1070), for a portion of the hot methanation reaction products, comprising:
- an inlet (1075) positioned between the outlet from the reactor (1005) and the water separation means (1025); and
- an outlet (1080) positioned upstream from the inlet to the reactor.

6. Device (1000) according to one of claims 1 to 5, which comprises:
- a means (1085) for measuring the flow rate of the syngas downstream from the mixing location; and
- a recirculator (1090) of the hot natural gas input into the bypass channel (1070), controlled as a function of the syngas flow rate measured.

7. Device (1000) according to one of claims 1 to 6, wherein the separation means (1025) is configured to cool the synthetic natural gases to a temperature between -5°C and +60°C.

8. Device (1000) according to claim 7, wherein the water separation means (1025) is configured to cool the synthetic natural gases to a temperature below the dew point temperature of water at the operating conditions of the considered reactor (1005).

9. Device (1000) according to claims 7 to 8, wherein the water separation means (1025) is configured to cool the synthetic natural gases to a temperature below the dew point temperature at the operating conditions of the reactor (1005).

10. Device (1000) according to one of claims 1 to 9, wherein the isothermal reactor (1005) is a fluidized-bed reactor.

11. Device (1000) according to claim 10, which comprises at least one heat exchange surface (1006) positioned in the fluidized bed.

12. Method (1600) for producing synthetic gas, **characterized in that** it comprises:
- a water electrolysis step (1640) to produce oxygen and hydrogen;
- a step (1645) of supplying carbon dioxide;
- a step (1650) of injecting hydrogen, output from the electrolysis step, into a supply channel supplied with carbon dioxide, output from the carbon dioxide supply step, this carbon dioxide and this hydrogen forming a syngas;
- a methanation reaction step (1605), comprising:
- a step (1610) of inputting syngas into an isothermal methanation reactor by means of the syngas supply channel; and
- a step (1615) of outputting synthetic natural gas;
- a step (1620) of separating water, comprising:
- a step (1625) of inputting synthetic natural gas and
- a step (1630) of outputting dehydrated synthetic natural gas;
- a step (1635) of bypassing a portion of the dehydrated synthetic natural gas output from the water separation step to the syngas supply channel in order to provide a mixture of the syngas and the bypassed synthetic natural gas to the reactor.

13. Method (1600) according to claim 12, which comprises a step 1655 of bypassing a portion of the hot methanation reaction products, to upstream of the methanation step.
